# EUROPEAN PATENT APPLICATION

(11) **EP 1 374 702 A1**
(43) Date of publication of application: **02.01.2004**
(21) Application number: 02707123.2
(22) Date of filing: 20.03.2002
(51) Int. Cl.: A23L 1/22, A23L 1/226

(54) **FLAVOR MATERIALS AND PROCESS FOR PRODUCING THE SAME**

(30) Priority: 28.03.2001 JP 2001093690
(71) Applicant: Ajinomoto Co., Inc., Tokyo 104-8315 (JP)
(72) Inventor: KAWAGUCHI, Hirokazu, c/o Food R&D Lab., Kawasaki-shi, Kanagawa 210-8681 (JP); HAYASHI, Kazuhiro, c/o Food R&D Lab., Kawasaki-shi, Kanagawa 210-8681 (JP)
(74) Representative: Strehl Schübel-Hopf & Partner
(86) International application number: PCT/JP2002/002719
(87) International publication number: WO 2002/078467

(57) **Abstract**

The present invention provides a flavoring agent material produced by heating an aqueous solution essentially comprising 0.2-20 % by weight of ascorbic acid and 0.6-60 % by weight of ethanol with pH 3.5-7.5 at 70-120°C for 1-14 days, particularly the flavoring agent material preferably containing 0.21 ppm or more of sotolon (3-Hydroxy-4,5-dimethyl-2(*5H*)-furanone). The subject of the present invention is establishing a process of producing a flavoring agent material which can give a favorable flavor to products various foods, beverages and the like, giving favorable flavor to foods and drinks using it, and raising the quality of foods and the like.

## Description

### FIELD OF THE INVENTION

The present invention relates to a flavoring agent material that may impart a desirable flavor to products such as in the field of food and drink, and a process for producing the same.

### BACKGROUND ART

Giving food and drink with desirable flavor and improving the quality of various food products are very important for producing of food.

It is already known that sotolon (3-Hydroxy-4, 5-dimethyl-2 (*5H*)-furanone) plays an important role in the enhancement of spice flavor in food and drink, particularly the impact in original taste. Sulser H. *et al.* report the contribution of sotolon to the improvement in the flavor strength of a seasoning (Z Lebensm Unters Forsch 1972, 148, 215-221). Blank I., Shieberle P., and Grosch W. also report in *"Progress In Flavour Precursor Studies"* that sotolon has a protein hydrolysate- or curry-like flavor.

In nature, the presence of sotolon has been confirmed in sugarcane, the seeds of Fenugreek (*Trigonella foenum-graecum*), which is a plant of the leguminous family, sherry, and coffee, for example. Fenugreek is distributed in Asian regions in and around India and the coastal areas of the Mediterranean Sea. Its dried seeds are used mainly as a spice indispensable for making curry in particular. The soloton content is known to increase by ripening the Fenugreek for a long period (about two years). Currently, sotolon is generally produced by extracting from Fenugreek or its seeds. Specifically, a process is under consideration in which sotolon is obtained at high yields by heat-treating Fenugreek or its seeds under various conditions (Japanese Patent Application Laid-Open (Kokai) Nos. Hei 2-261358 and Hei 11-69953). In Fenugreek, sotolon is produced when dicarbonyl compounds such as methylglyoxal react with 4-hydroxyisoleucin. However, since Fenugreek contains dicarbonyl compounds such as methylglyoxal in only small amounts, a long ripening period of two years is required to increase the sotolon content. To solve this problem, the present inventors had previously found that a flavoring composition was obtained in an unconventionally very short period of time by degrading saccharindes in a solution containing saccharides in the presence of a super- or sub-critical water to obtain high concentrations of dicarbonyl compounds such as methylglyoxal, and reacting the dicarbonyl compounds with 4-hydroxyisoleucin in Fenugreek. The resultant flavoring compositions containing a high content of sotolon was high-quality and high-strength without having undesired smell and taste (Japanese Patent Application No. 2000-296821)

However, since Fenugreek and its seeds are by themselves not abundantly produced, mass production of sotolon by extraction is not viable. Furthermore, since this process requires complicated steps of grinding, enzymatic processing, heating, separation, etc., that cannot be performed by existing equipment, new plant investment has to be made.

On the other hand, Konig T., Schwab W. *et al.,* predicting that sotolon is the substance responsible for the unpleasant smell generated when a citrus beverage is preserved for a long period at high temperatures, have analyzed its generation mechanism. As a result, they estimate that sotolon is generated by a slight amount of ascorbic acid contained in the juice reacting with ethanol (*J. Agric. Food Chem.* 1999, 47, 3288-3291).

This study, however, merely focuses on the identification of the unpleasant smell component in a citrus beverage and the mechanism by which the responsible substance is generated. The study thus lacks the concept of how to increase the production amount of sotolon and use it as a flavor agent. Thus, while ascorbic acids and ethanol have been used in food and drink, there are no cases where a solution produced by heating ascorbic acid and ethanol was used in food or drink, particularly in a flavoring agent material.

### SUMMARY OF THE INVENTION

The inventors attempted to establish a process for producing a flavoring agent which may impart a desirable flavor to products in the field of food and drink, for example, so that various food/drink items can be given with desirable flavors and the quality of food products can be improved. In this attempt, the inventors focused on the development of a novel flavoring agent material using ascorbic acid and ethanol.

The above-mentioned method by Konig T., Schwab W. *et al.* was capable of producing only 0.20 ppm of sotolon even after three weeks of heating, which is not enough for applications as a flavoring agent in terms of flavor strength.

In order to use a heated solution of ascorbic acid and ethanol as a flavoring agent, it was necessary to confirm that the chemical changes caused by the reaction do not pose any problem when the flavor material is used in food/drink products. At the same time, it was also necessary to increase the production amount of sotolon if it was to be used as a flavoring agent. Thus, the inventors analyzed the reaction conditions.

Specifically, after confirming that sotolon is produced by the reaction of ascorbic acid and ethanol, the inventors successfully increased the production amount of Sotolon by optimizing the concentrations of ethanol and ascorbic acid, heating temperature, pH, etc.

Namely, the present invention provides the following (1) to (5):
(1) A process for producing a flavoring agent material, comprising heating an aqueous solution with pH 3.5-7.5 which essentially comprises 0.2-20 % ascorbic acid by weight and 0.6-60 % ethanol by weight at 70-120°C for 1-14 days;
(2) A flavoring agent material produced by the process described in (1);
(3) The flavoring agent material according to (2), containing 0.21 ppm or more of sotolon (3-Hydroxy-4, 5-dimethyl-2 (*5H*)-furanone);
(4) A flavoring agent containing the flavoring agent material according to (2) or (3); and
(5) A food/drink product containing the flavoring agent material according to (2) or (3).

This specification includes part or all of the contents as disclosed in the specification and/or drawings of Japanese Patent Application No. 2001-093690, which are priority documents of the present application.

### BEST MODE TO CARRY OUT THE INVENTION

The present invention will be hereafter described in detail.

In the present invention, the term "flavoring agent material" refers to a solution as a whole containing sotolon obtained by the reaction of ascorbic acid and ethanol. It may be the solution per se, or a powder obtained by drying.

Further, the term "flavoring agent" in the present invention refers to seasonings to be used for imparting flavors to food/drink products. Examples of such seasonings include livestock meat extracts such as chicken extracts, seafood extracts, curry powder, sauces, various vegetable extracts, soy sauce, hydrolyzed vegetable protein (HVP) liquid, and hydrolyzed animal protein (HAP) liquid. The flavoring agent may be used during the production of food/drink products or when the product is consumed.

The process according to the present invention essentially uses ascorbic acid and ethanol. The ascorbic acid may be one ordinarily used for the production of general food/drink products. It may be in the form of a salt, and it may be either in a reduced or oxidized form. The ascorbate that may be preferably used in the present invention includes is sodium ascorbate and the like. Ethanol may also be in any of the above-mentioned forms, as long as it is one ordinarily used for the production of general food/drink products.

The above ascorbic acid and ethanol are heated in the form of an aqueous solution. The concentration of ascorbic acid in the solution may be in a range of from 0.2 to 20 % by weight, preferably from 1.0 to 4.0 % by weight. The concentration of ethanol in the solution may be in a range of from 0.6 to 60 % by weight, preferably from 3.0 to 12 % by weight. A catalyst such as metal ion (Fe³⁺) may be added to the aqueous solution containing the ascorbic acid and ethanol.

The solution may further contain other components as long as they do not hinder the obtainment of the flavoring agent material according to the present invention.

The method of heating the solution is not particularly limited and may be as commonly performed in the production of food/drink products. For example, the heating may be performed by a steam vessel. The heating temperatures should be in a range of from 70 to 120°C, preferably from 95 to 105°C. When temperatures exceeding 100°C are used, heating is performed under pressure.

The reaction is not particularly limited and may be carried out either in a closed system or an open system. In the case of an open system, the reaction can be efficiently carried out by attaching a reflux tube.

The pH of the aqueous solution, which varies depending on the kind or amount of ascorbic acid or its salt in the initial reaction solution, may be in a range of from 3.5 to 7.5, preferably from 5 to 7. When the pH is less than 3.5, yield of sotolon is poor and corrosion of the apparatus by the acid occurs. When the pH is more than 7.5, sotolon yield is reduced. The pH is adjusted by adding concentrated hydrochloric acid or sodium hydroxide, for example. The reaction period is 1 to 14 days, preferably 1 to 6 days, so that the procedure can be facilitated and the production of sotolon can favorably occur.

The progress of the above reaction can be confirmed by a usual analysis method such as HPLC or GC-MS, which are commonly employed in the relevant art. By analyzing the resultant solution containing sotolon produced by the heating reaction, ascorbic acid, ethanol, and sotolon can be confirmed to exist in the solution at various ratios depending on the reaction conditions. The flavoring agent material according to the present invention requires not less than 0.21 ppm, preferably more than 1.0 ppm, of sotolon. Below 0.21 ppm, the effect decreases.

The flavoring agent material according to the present invention can be applied in the entire range of food/drink products. In particular, the flavoring agent material according to the present invention may be added to a flavoring agent by, e.g., hydrolyzing a protein or a material containing a protein with a protein-hydrolyzing enzyme or a microorganism with a protein-hydrolyzing ability. This way, the "punch" of the flavoring agent can be enhanced and be turned into a more versatile, and therefore preferable, flavoring agent.

The "flavoring agent" containing the flavoring agent material according to the present invention refers to seasonings for imparting flavors to food/drink products. Such flavoring agent include various kinds of sauces and bastings including Worcester sauce, mayonnaise and ketchup, meat extracts such as beef extract, pork extract and chicken extract, seafood extracts such as bonito extract and tuna extract, curry powder, various vegetable extracts, soy sauce, hydrolyzed vegetable protein (HVP) amino acid solution, and hydrolyzed animal protein (HAP) amino acid solution. The flavoring agent may be used during the production of the food/drink products or when the product is ate or dinked.

The flavoring agent may be in the form of either a liquid, solid, or paste. In particular, in the case of a seasoning produced by reacting a protein hydrolyzing enzyme or a microbe having a protein hydrolyzing ability with protein or a material containing a protein, it is preferable to add the flavoring agent material according to the present invention during the producing process.

Examples of the "food/drink products" containing the flavoring agent material according to the present invention include powdered or liquid soup, cheese, instant foods sold in a frozen or sealed condition, retort-pouched foods, and retort-pouched sauces. The food/drink items also include, e.g.: Japanese foods such as suimono (a soy sauce or salt base clear soup), noodles, oden (hotchpotch), chawanmushi (steamed egg dish), omelet, various kinds of nimono (simmered dishes), broiled fish, and pickled vegetables; Chinese dishes such as ramen (noodles), chop suey, cha-han (fried rice with eggs and meat), mabo-dofu (fried tofu mixed with ground meat), happo-sai (assorted vegetables in a thick sauce), gyoza (meat-and-vegetable fried dumpling), shark-fin soup, and Chinese soup; Western dishes such as curry, beef stew, white stew, consommé, hamburger, and steak; and also various snack foods, and instant noodles.

The amount of the flavoring agent material added in a food/drink product is not particularly limited and may be appropriately selected depending on the kind or situation of use of the product. From standpoint of a flavor, however, the sotolon concentration may preferably be in a range of from 1 ppb to 100 ppm at the time of final consumption. Nor is there any particular limitation as to when the seasoning ingredient material should be added in the food/drink item, whether during production or at the time of eating or drinking.

### EXAMPLES

The present invention will be hereunder described in more detail by way of examples only, though these examples should not be taken as limiting the scope of the present invention.

### [Example 1]: Confirmation of sotolon production

Five ml of ethanol and 1.66 g of ascorbic acid were put in a 300 mL eggplant flask and dissolved with 42 mL of water. A solution of sodium hydroxide was further added to it, and pH was adjusted to 5. The flask was then hermetically sealed and heated at 100°C for six days. After the reaction, the sotolon content was measured by HPLC, which revealed that 1.32 ppm of sotolon was produced.

The HPLC conditions were as follows:
Column: CAPSELL PAK C 18 (250 mm × 4 mm, 5 µm) (Shiseido)
Elueut: Linear gradient of Liquid A: 100 % acetonitrile, and Liquid B: water (pH adjusted to 2.5 by sulfuric acid)

**Table 1**

| Minutes | Liquid A | Liquid B |
|---|---|---|
| 0-5 | 0 % | 100 % |
| 5-20 | 25% | 75% |
| 20-30 | 90 % | 10 % |

Elution rate: 1 ml/min
Detection UV: 235 nm

### [Example 2]: Analysis of reaction conditions

After a reaction was conducted in a method similar to Example 1 with changes in the concentration of ethanol and ascorbic acid as well as pH, amounts of sotolon produced under various reaction conditions were compared. The results are shown in Table 2.

**Table 2**

| Comparison of amounts of sotolon produced under various reaction conditions | | | | |
|---|---|---|---|---|
| | Ascorbic acid (g) | Ethanol (mL) | pH | Sotolon concentration (ppm) |
| Solution 1 | 0.42 | 1.3 | 3 | 0.01 ppm or less |
| Solution 2 | 0.42 | 1.3 | 5 | 0.28 |
| Solution 3 | 0.42 | 1.3 | 7 | 0.21 |
| Solution 4 | 0.83 | 2.5 | 3 | 0.01 ppm or less |
| Solution 5 | 0.83 | 2.5 | 5 | 0.35 |
| Solution 6 | 0.83 | 2.5 | 7 | 0.30 |
| Solution 7 | 1.66 | 5.0 | 3 | 0.01 ppm or less |
| Solution 8 | 1.66 | 5.0 | 5 | 1.32 |
| Solution 9 | 1.66 | 5.0 | 7 | 1.09 |

As will be seen from the results shown in Table 2, the sotolon concentration was maximum when ascorbic acid was 4 % by weight, ethanol was 12 % by weight, and pH was 5 (Solution 8). While the ratio of ascorbic acid to ethanol is constant in Solutions 1-9, there was not much difference in the amount of sotolon produced when the ascorbic acid/ethanol ratio was varied.

### [Example 3]: Organoleptic evaluation

An appropriate amount of hot water was poured on a commercially available powdered chicken consommé to thereby prepare a soup as a control. To this soup was added the solutions 5, 6, 8 and 9, from which good results have been obtained in Example 2, in an amount of 2 % per solution, and an organoleptic evaluation was conducted by a panel of three experts. The evaluation items included strength of flavor (punch, spice flavor, chicken flavor), preferableness of flavor (spice flavor, chicken flavor), and overall evaluation, with each item given the following evaluation point. After the individual solutions were compared relative to the control, an average of the evaluation points by the three members of the panel was calculated for each item. The results are shown in Table 3.

### Strength of flavor and punch

| | |
|---|---|
| Greater than the control | 2 |
| A little greater than the control | 1 |
| About equal to the control | 0 |
| A little less than the control | -1 |
| Less than the control | -2 |

### Preferableness of flavor and overall evaluation

| | |
|---|---|
| More preferable to the control | 2 |
| A little more preferable to the control | 1 |
| About equal to the control | 0 |
| A little less preferable to the control | -1 |
| Less preferable to the control | -2 |

**Table 3**

| Evaluation of the chicken consommé | | | | | |
|---|---|---|---|---|---|
| Evaluation items | Control | Solution 5 | Solution 6 | Solution 8 | Solution 9 |
| Strength of punch | 0.0 | 0.3 | 1.0 | 1.0 | 1.0 |
| Strength of spice flavor | 0.0 | 0.7 | 1.0 | 1.0 | 1.3 |
| Strength of chicken flavor | 0.0 | 0.7 | 1.0 | 1.3 | 1.7 |
| Preferableness of spice flavor | 0.0 | 0.3 | 1.0 | 0.3 | 1.0 |
| Preferableness of chicken flavor | 0.0 | 0.3 | 1.3 | 0.3 | 1.3 |
| Overall evaluation | 0.0 | 0.3 | 0.7 | 0.3 | 1.3 |

As will be seen from the results shown in Table 3, solutions 5, 6, 8, and 9 obtained by the present invention were evaluated to have greater punch, spice flavor, and chicken flavor than the control and therefore to be more preferable.

### INDUSTRIAL APPLICABILITY

The present invention allows a flavoring agent material containing an unconventionally great amount of sotolon to be produced efficiently in a short period. Thus, there can be obtained a high-quality flavoring agent with a high strength. The process according to the present invention is highly advantageous, requiring no complicated steps such as are necessary for the production of sotolon according to the prior art or investment in new equipment.

All publications, patents and patent applications cited herein are incorporated herein by reference in their entirety.

## Claims

1. A process for producing a flavoring agent material, comprising heating an aqueous solution with pH from 3.5 to 7.5 which essentially comprises from 0.2 to 20 % by weight of ascorbic acid and from 0.6 to 60 % by weight of ethanol, at 70 to 120°C for 1 to 14 days.

2. A flavoring agent material produced by the process according to claim 1.

3. The flavoring agent ingredient material according to claim 2, containing 0.21 ppm or more of sotolon (3-Hydroxy-4, 5-dimethyl-2(*5H*)-furanone).

4. A flavoring agent containing the flavoring agent material according to claim 2 or 3.

5. A food/drink product containing the flavoring agent material according to claim 2 or 3.

## Amended claims

### Amended claims in accordance with Rule 86(2) EPC.

1. A process for producing a flavoring agent material, comprising heating an aqueous solution with pH from 3.5 to 7.5 which essentially comprises from 0.2 to 20 % by weight of ascorbic acid and from 0.6 to 60 % by weight of ethanol, at 70 to 120 °C for 1 to 14 days.

2. (Amended) A flavoring agent material produced by the process according to any one of claims 1 and 6 to 9.

3. The flavoring agent material according to claim 2, containing 0.21 ppm or more of sotolon (3-Hydroxy-4, 5-dimethyl-2(5H)-furanone).

4. A flavor agent containing the flavoring agent material according to claim 2 or 3.

5. A food/drink product containing the flavoring agent material according to claim 2 or 3.

6. (Added) The process according to claim 1, wherein the content of ascorbic acid is from 1.0 to 4.0 % by weight.

7. (Added) The process according to claim 1, wherein the content of ethanol is from 3.0 to 12 % by weight.

8. (Added) The process according to claim 1, wherein the heating temperature is from 95 to 105 °C.

9. (Added) The process according to claim 1, wherein the heating period is from one to six days.
